# EUROPEAN PATENT SPECIFICATION

(11) **EP 1 144 183 B1**
(45) Date of publication and mention of the grant of the patent: **11.02.2004**
(21) Application number: 99930858.8
(22) Date of filing: 01.07.1999
(51) Int. Cl.: B32B 1/00

(54) **FILLED LOW ADHESION BACKSIZE PATTERN-COATED FILMS**
FOLIEN MIT EINER FÜLLSTOFF ENTHALTENDEN, IN EINEM MUSTER AUFGETRAGENEN RÜCKSEITENBESCHICHTUNG FÜR EINE NIEDRIGE ADHÄSON
FILMS REVETUS D'UN MOTIF A APPRET A FAIBLE ADHERENCE (LAB)

(30) Priority: 03.11.1998 US 185208
(43) Date of publication of application: 17.10.2001
(73) Proprietor: 3M Innovative Properties Company, St. Paul, MN 55133-3427 (US)
(72) Inventor: FAGAN, Mark, E., Saint Paul, MN 55133-3427 (US); BOHLKE, Susan, N., Saint Paul, MN 55133-3427 (US); RANDEN, Neil, A., Saint Paul, MN 55133-3427 (US)
(74) Representative: VOSSIUS & PARTNER
(86) International application number: PCT/US1999/014960
(87) International publication number: WO 2000/026017

(56) References cited:
- WO-A-98/45052
- DE-A- 19 724 648
- US-A- 5 273 805

## Description

### Field of the Invention

This invention relates to a pressure-sensitive adhesive coated tape, and more particularly to a pressure-sensitive adhesive-coated low adhesion backsize pattern-coated tape.

### Background of Invention

Some transparent tapes having a pattern-coated low adhesion backsize (LAB) layer covered film, such as Pop-up Tape manufactured by 3M, are smooth and shiny. Consequently, the coating patterns are hard to see and the tapes tend to have a uniform visual appearance. Textured films and tapes produced with a textured film tend to have reduced film gloss relative to that of a smooth film, that is, such films and tapes have a matte appearance. Sometimes, pattern-coated LAB layers will negate the topography of the textured film by filling the valleys and covering most of the peaks of the film. Thus, the pattern-coated areas are fairly smooth and shiny and contrast greatly with the dull, uncoated areas of the film. Therefore, the coating patterns are easy to see and the resulting tape has a nonuniform visual appearance.

### Summary of Invention

Briefly, in one aspect of the present invention, a coated article is provided having a textured film backing with a top surface and a bottom surface, and the top surface has a layer of pattern-coated low adhesion backsize (LAB), such that there are areas that are coated and areas that are uncoated and the appearance of the coated and uncoated areas on a textured film is visibly uniform. This is advantageous and provides generally a coated film that has a surface that has visually indiscernible areas, even when at least one portion of the film is coated with LAB, and the remainder of the film is uncoated. This is particularly advantageous for articles using textured films, although the present invention provides the same advantages for non-textured films, as well.

When referring to pattern coated films having at least one uncoated area, "visibly uniform" means that the 60 degree film gloss of the coated and uncoated areas are within ± 50% of the uncoated textured film gloss. When referring to patterned coated films having no uncoated areas, "visibly uniform" means the 60 degree film gloss of the coated areas are within ± 50% of the 60 degree film gloss of the lowest gloss value of the coated areas.

LABs used in the present invention contain at least one particulate filler, typically an inorganic filler, such as amorphous silica or alumina and the diameter of the particles is in the range of the topographical features ofthe textured film and the thickness of the LAB and such diameter is typically in the range of 1 to 10 micrometers. Generally, the filler is present in the range of 1 to 15 parts by weight of the low adhesion backsize coating preferably 6 to 10 parts by weight.

In an alternative embodiment, the present invention provides a coated film having a film with a top surface and a bottom surface, and the top surface has a layer of pattern-coated low adhesion backsize (LAB), such that there a first area coated with a first LAB and a second area coated with a second LAB and the appearance of the two coated areas on the film is visibly uniform. This is advantageous and provides generally a coated film that has a surface that has visually indiscernible areas, even when at least one portion of the film is coated with a first LAB, and the remainder of the film is coated with a second LAB. This is generally not an issue until, the coating weights differ, pattern-coating with the first coating area or the compositions of the LABs differ, in which case the coatings on a textured film may appear different and the pattern becomes visible.

In yet another embodiment, the present invention provides a coated film having a textured film with a top surface and a bottom surface, and the top surface has a layer of pattern-coated low adhesion backsize (LAB), such that there are areas that are coated with at least one area coated with a first LAB, at least one area coated with a second LAB and at least one area that is uncoated, such that the appearance of the two coated areas and the uncoated area on a textured film are visibly, uniform. This is advantageous and provides generally a coated film that has a surface that has visually indiscernible areas, even when at least one portion of the film is coated with a first LAB, another portion is coated with a second LAB and the remainder of the film is uncoated. This is generally not an issue until, the coating weights differ, pattern-coating with the first coating area or the compositions of the LABs differ, in which case the coatings on a textured film may appear different and the pattern becomes visible.

In both of the alternative embodiments, the first and second LAB may be the same composition or different compositions, and if the LABs are the same compositions, they may vary only by concentration or by coating pattern.

Advantageously, the present invention enhances the use of pattern-coated LABs providing a range of release levels, as well as allowing differential releases, while providing a visually uniform appearance of such pattern-coated textured films.

### Description of the Preferred Embodiment(s)

Pattern coating enables a range of release levels, as well as allowing differential release. Pattern-coated articles tend to have a uniform appearance when the tape film backing is a smooth film. Once the tape film backing selected is a textured film, the coated areas of the pattern coating have the effect of masking the texture and giving a visual impression of a smooth surface. However, the uncoated portion of the pattern coating remains unaffected and gives the visual impression of the texture surface, which is typically a matte (dull) appearance, rather than a glossy (shiny) appearance.

The present invention provides for a means to make a pattern-coated textured film appear uniform across the width of the film, that is the coated and uncoated areas appear to have a matte finish. The present invention is particularly advantageous for articles having differential release, such as pop-up tapes. Pop-up tapes function by having a differential release across each tape strip (*See for example* U.S. Patent Nos. 5,086,946, 5,401,547, and 5,607,737). One way to achieve differential release is by pattern coating a portion of the tape film backing with LAB and fully coating the remaining area of the tape film backing.

Alternatively, it is within the scope of the present invention to coat a textured film having a top surface and a bottom surface, such that the top surface has a layer of pattern-coated low adhesion backsize (LAB), wherein the coated pattern provides for at least one area coated with a first LAB, at least one area coated with a second LAB and at least one area that is uncoated, and the appearance of the two coated areas and the uncoated area on a textured film are visibly uniform. This is advantageous and provides generally a coated film that has a surface that has visually indiscernible areas. This is generally not an issue until, the coating weights differ, pattern-coating with the first coating area or the compositions of the LABs differ, in which case the coatings on a textured film may appear different and the pattern becomes visible.

The present invention provides for a means to make a pattern-coated films appear uniform across the width of the film. The present invention is particularly advantageous for articles having differential release, such as pop-up tapes. Pop-up tapes function by having a differential release across each tape strip (*See for example* U.S. Patent Nos. 5,089,946, 5,401,547, and 5,607,737). One way to achieve differential release is by pattern coating a portion of the tape film backing with LAB and fully coating the remaining area of the tape film backing.

Once the tape film backing has been pattern coated, this coated backing can be converted into tape rolls, such as Scotch™ Tape or converted into tape pads, such as Scotch™ Pop-up Tape.

When converted into a tape roll, each tape roll comprises a textured tape film backing having first and second opposite major side surfaces, wherein a layer of adhesive is permanently adhered to the first side surface of the textured tape film backing, the layer of adhesive being releasably adhered along the second surface of the adjacent layer of textured tape film backing strip in the roll and the second surface of each textured tape film backing is pattern coated with a particulate filled low adhesion backsize layer. In the tape roll configuration, a length of adhesive coated textured film backing is wound on an inner core and is successively wound upon itself forming a roll of adhesive coated tape.

When converted into tape pads, each pad is comprised of pre-cut tape strips disposed one on top of another, such that each tape strip comprises a textured tape film backing having first and second opposite major side surfaces and first and second opposite ends with the first end of each tape strip being in alignment with the second end of an adjacent tape strip in the stack, and a layer of adhesive permanently adhered to the first side surface of the tape film backing, the layer of adhesive of each tape strip being releasably adhered along the second surface of the adjacent (lower) tape strip in the pad.

The tape film backing is converted in such way that each of the tape strips comprises release means for providing a first adhesion level along a first end portion of each of the sheets adjacent the first end of the backing between the layer of adhesive and the second side surface of the adjacent (lower) sheet in the stack. Some pop-up tapes manufactured into this configuration have a surface texture that is smooth and shiny. Therefore, the coating patterns are difficult to see and the tapes tend to have a uniform appearance. In general, coating textured films results in an increase in gloss and a smoother and shinier appearance than coating on non-textured films. This is particularly true when the topographical features of the film are smaller than the coating thickness, as compared to a similar coating thickness applied to a smooth film.

Generally, as used herein, "film tape backing" means a generally flat, flexible structure thermoplastic film, such as, polyester, polypropylene, or combinations of the above mentioned materials. Preferably, the film tape backing is a transparent textured polypropylene. As used herein, "textured" means in general, a film having a surface that has feature heights varying by about 10 micrometers in height. Examples of textured films include co-extruded multi-layer polypropylene films with phase-separating top layers, matte coated polypropylene and polyester films, and acetate films.

Low adhesion backsize refers to a material which readily releases from a layer of pressure sensitive adhesive and includes, but is not limited to, silicones, fluorocarbons, acrylates, urethanes, chrome complexes, grafted or block siloxane hydrocarbons, and blends of these materials. Examples of various low adhesion backsizes are found in U.S. Patent Nos. 4,421,904,4,313,988, and 4,279,717, the entire specifications of which are herein expressly incorporated by reference. Other low adhesion backsizes, which may be used according to the present invention, are described in U.S. Patent Nos. 2,607,711, 2,876,894, and 2,532,011, the entire specifications of which are also herein incorporated by reference.

The pressure sensitive adhesive may be of an acrylic, silicone, rubber-resin, or any other suitable composition. For example, the adhesive may comprise acrylic adhesive IOA(95%)/AA (4.5%) Iso-octyl acrylate/Acrylic Acid. Adhesives for use with the present invention are described in U.S. Patent Nos. 4,699,842, 3,578,622, 3,331,729, 2,926,105, and 4,835,217, the entire specifications of which are herein expressly incorporated by reference. Repositionable microsphere adhesives (such as, IOA-ammonium acrylate) are also contemplated as an adhesive for use according to the present invention and for example, may be prepared according to U.S. Patent Nos. 3,691,140, 4,166,152, and 4,994,322.

A typical coating weight for a LAB is about 0.85 g/m², on a silicone only basis. The adhesive coat weight is usually 4.8 grains/24in².

Adding particulate filler, such as inorganic particulates to LAB roughens the surface of the coating and may prevent the gloss from increasing. The coating thickness must be thinner than the diameter of the largest particle size. Then the coating pattern is difficult to see and a tape having a uniform appearance is produced. Preferably, the filler is an inorganic filler, such as amorphous silica, alumina, or calcium carbonate and waxes and the particles have a diameter that is greater than the thickness of the low adhesion backsize coating layer and in the range of the feature dimensions of the textured film. The filler is present in the range of 1 to 15 parts by weight, preferably 6 to 10 parts by weight of the low adhesion backsize coating.

Preferably, this invention provides a way to match the appearance of coated and uncoated areas on a textured film. More generally, the present invention provides a way to match the appearance of a pattern-coated layer on a film, whether the pattern produces coated and uncoated areas or multi-coated areas. This is particularly beneficial for tapes having differential release, such as Pop-up Tapes by 3M, because only part of the tape film is pattern-coated with LAB.

This invention is further illustrated by the following examples that are not intended to limit the scope of the invention. In the examples, all parts, ratios and percentages are by weight unless otherwise indicated.

### Examples

### Test Methods

60-degree gloss over black velvet was measured for film samples and over blackened glass tile for tape samples using test method ASTM D2457-90 and a BYK - Gardner haze-gloss Reflectometer.

### Example 1

The materials used to make pattern coated LAB film samples and pattern coated tape examples with a uniform appearance were:
- LAB:: 55 parts TEGO™ RC 711 (UV curable, silicone acrylate release compound, commercially available from Goldschmidt Chemical Corp., Hopewell, VA) 45 parts TEGO™ RC 726 (UV curable, silicone acrylate release compound, commercially available from Goldschmidt Chemical Corp., Hopewell, VA)
- Photoinitiator:: 3 parts Darocur™ 1173 (commercially available from Ciba-Geigy Corp., Hawthorne, NY)
- Filler:: 8 parts Syloid™ 7000 (synthetic amorphous silica particles, commercially available from W.R. Grace & Co., Baltimore, MD)
- Film:: TREAX YM™ 1.6 mil thick matte BOPP (matte polypropylene film, commercially available from Toray Plastics (America) Inc., North Kingston, RI)
- Primer:: 91 parts CP-343-3 chlorinated polyolefin primer resin (available from Eastman Chemical Products, Inc., Kingsport, TN) and 909 parts toluene (for aiding the adherence of the adhesive to the film backing)
- Adhesive:: acrylate adhesive (96% Iso-octyl acrylate/4% Acrylic acid)

The filled silicone LAB was applied with a multi-roll coater. The LAB was supplied to the first two rolls, successively thinned, and applied to the web by a patterned roll. The patterned roll was made of rubber. The rubber had had been cut away to produce a raised image of the coating pattern. The coating pattern provides two areas (A1 and A2) having different release levels. The LAB was applied to the web by the raised areas of the patterned roll, similar to relief printing. The pattern roll was cut in two sets of alternating bands. One set of the bands was simply smooth, raised surfaces. The other set was cut with narrow, evenly spaced grooves.

For all the examples, a typical coating weight for the LAB was about 0.85 grams/meter² on a silicone only basis. For adhesive tape samples, the adhesive coating weight was typically 4.8 grains/24inch².

Specular gloss is a useful method for characterizing gross differences in appearance for film and tape samples. The 60 degree gloss values were measured with the LAB coated textured film samples and are summarized in Table 1.

**Table 1**

| Example | LAB Filler (parts) | LAB Area | 60 Degree Gloss (Mean Value) | Standard Deviation | N(number of samples tested) |
|---|---|---|---|---|---|
| Control | no LAB | no LAB | 27.7 | 3.7 | 23 |
| 1 | 6 | A1 | 24.3 | 2.4 | 33 |
| 1a | 6 | A2 | 21.8 | 2.2 | 36 |
| 2 | 8 | A1 | 23.3 | 1.6 | 33 |
| 2a | 8 | A2 | 19.9 | 2.1 | 36 |
| 3 | 10 | A1 | 21.8 | 2.2 | 33 |
| 3a | 10 | A2 | 17.3 | 1.4 | 36 |

The appearance of the coated and uncoated areas on the low adhesion backsize pattern coated areas (A1) was visibly uniform. The 60 degree gloss values for the fully coated LAB film areas (A2) were relatively unchanged compared to the gloss value measured for the uncoated film itself (a decrease of about 6-10 units, depending on the particle loading). The differences between these coated areas were visually indiscernible from each other.

The results of adhesive coated tape samples are reported below in Table 2.

**Table 2**

| Example | LAB Filler (parts) | LAB Area | 60 Degree Gloss (Mean Value) | Standard Deviation | N (number of samples tested) |
|---|---|---|---|---|---|
| 4 | 6 | A1 | 15.1 | 0.4 | 12 |
| 4a | 6 | A2 | 15.0 | 0.4 | 12 |
| 5 | 8 | A1 | 16.0 | 0.4 | 12 |
| 5a | 8 | A2 | 11.6 | 0.3 | 12 |
| 6 | 10 | A1 | 14.9 | 0.5 | 12 |
| 6a | 10 | A2 | 11.5 | 0.2 | 12 |

In general, the adhesive coating resulted in lower gloss values or a duller appearance. The trends noted above for the LAB coated textured film were similar for the adhesive coated tape samples, resulting in adhesive tapes having visually uniform appearances.

Various modifications and alterations of this invention will become apparent to those skilled in the art without departing from the scope and principles of this invention, and it should be understood that this invention is not to be unduly limited to the illustrative embodiments set forth hereinabove. All publications and patents are incorporated herein by reference to the same extent as if each individual publication or patent was specifically and individually indicated to be incorporated by reference.

## Claims

1. A coated article having a textured film backing with a top surface and a bottom surface, and on the top surface, a layer of pattern-coated particulate filled low adhesion backsize (LAB), such that there are areas on the top surface of the textured film backing that are coated and areas that are uncoated and the appearance of the coated and uncoated areas on the textured film backing is visibly uniform.

2. The coated article according to claim 1 wherein the particulate filler is an amorphous silica.

3. The coated article according to claim 1 wherein the particulate filler has a diameter that is greater than the thickness of the low adhesion backsize coating layer.

4. The coated article according to claim 1 wherein the particulate filler is present in the range of 1 to 15 parts by weight of the low adhesion backsize coating.

5. A coated film comprising a film having a top surface and a bottom surface, and the top surface has a layer of pattern-coated particulate filled low adhesion backsize, such that there is first area coated with a first low adhesion backsize and a second area coated with a second low adhesion backsize and the appearance of the two coated areas on the film is visibly uniform.

6. The coated film according to claim 5 wherein the first and second low adhesion backsize are the same.

7. The coated film according to claim 5 wherein the first and second low adhesion backsize are different.

8. The coated film according to claim 6 wherein the first area and the second area are coated with different patterns.

9. A coated film comprising a textured film with a top surface and a bottom surface, and the top surface has a layer of pattern-coated low adhesion backsize (LAB), such that there are areas that are coated with at least one area coated with a first low adhesion backsize, at least one area coated with a second low adhesion backsize and at least one area that is uncoated, such that the appearance of the two coated areas and uncoated area is visibly uniform.

10. The coated film according to claim 9 wherein the first and second low adhesion backsize are the same.

11. The coated film according to claim 9 wherein the first and second low adhesion backsize are different.

12. The coated film according to claim 10 wherein the first area and the second area are coated with different patterns.

## Patentansprüche

1. Beschichteter Gegenstand, der einen strukturierten Folienträger mit einer Oberseitenoberfläche und einer Unterseitenoberfläche und, auf der Oberseitenoberfläche, eine Schicht einer in einem Muster aufgetragenen, einen teilchenförmigen Füllstoff enthaltenden Rückseitenbeschichtung für eine niedrige Adhäsion (low adhesion backsize, LAB) aufweist, so dass Bereiche auf der Oberseitenoberfläche des strukturierten Folienträgers vorliegen, welche beschichtet sind, und Bereiche, welche unbeschichtet sind, und die Erscheinung der beschichteten und unbeschichteten Bereiche auf dem strukturierten Folienträger sichtbar einheitlich ist.

2. Beschichteter Gegenstand gemäß Anspruch 1, wobei der teilchenförmige Füllstoff ein amorphes Siliziumdioxid ist.

3. Beschichteter Gegenstand gemäß Anspruch 1, wobei der teilchenförmige Füllstoff einen Durchmesser aufweist, welcher größer ist als die Dicke der Rückseitenbeschichtungsschicht für eine niedrige Adhäsion.

4. Beschichteter Gegenstand gemäß Anspruch 1, wobei der teilchenförmige Füllstoff in einem Bereich von 1 bis 15 Gewichtsteile der Rückseitenbeschichtungsschicht für eine niedrige Adhäsion vorliegt.

5. Beschichtete Folie, umfassend eine Folie, welche eine Oberseitenoberfläche und eine Unterseitenoberfläche aufweist, und die Oberseitenoberfläche eine Schicht einer in einem Muster aufgetragenen, einen teilchenförmigen Füllstoff enthaltenden Rückseitenbeschichtung für eine niedrige Adhäsion aufweist, so dass ein erster Bereich, welcher mit einer ersten Rückseitenbeschichtung für eine niedrige Adhäsion beschichtet ist, und ein zweiter Bereich, welcher mit einer zweiten Rückseitenbeschichtung für eine niedrige Adhäsion beschichtet ist, vorliegt, und die Erscheinung der zwei beschichteten Bereiche auf der Folie sichtbar einheitlich ist.

6. Beschichtete Folie gemäß Anspruch 5, wobei die erste und zweite Rückseitenbeschichtung für eine niedrige Adhäsion gleich sind.

7. Beschichtete Folie gemäß Anspruch 5, wobei die erste und zweite Rückseitenbeschichtung für eine niedrige Adhäsion verschieden sind.

8. Beschichtete Folie gemäß Anspruch 6, wobei der erste Bereich und der zweite Bereich mit verschiedenen Mustern beschichtet sind.

9. Beschichtete Folie, umfassend eine strukturierte Folie mit einer Oberseitenoberfläche und einer Unterseitenoberfläche, und wobei die Oberseitenoberfläche eine Schicht einer in einem Muster aufgetragenen Rückseitenbeschichtung für eine niedrige Adhäsion (LAB) aufweist, so dass Bereiche vorliegen, welche beschichtet sind, wobei mindestens ein Bereich mit einer ersten Rückseitenbeschichtung für eine niedrige Adhäsion beschichtet ist, mindestens ein Bereich mit einer zweiten Rückseitenbeschichtung für eine niedrige Adhäsion beschichtet ist und mindestens ein Bereich unbeschichtet ist, so dass die Erscheinung der zwei beschichteten Bereiche und des unbeschichteten Bereichs sichtbar einheitlich ist.

10. Beschichtete Folie gemäß Anspruch 9, wobei die erste und zweite Rückseitenbeschichtung für eine niedrige Adhäsion gleich sind.

11. Beschichtete Folie gemäß Anspruch 9, wobei die erste und zweite Rückseitenbeschichtung für eine niedrige Adhäsion verschieden sind.

12. Beschichtete Folie gemäß Anspruch 10, wobei der erste Bereich und der zweite Bereich mit verschiedenen Mustern beschichtet sind.

## Revendications

1. Article revêtu ayant un film support texturé avec une surface supérieure et une surface inférieure, et sur la surface supérieure, une couche à apprêt à faible adhérence (LAB) chargée d'un matériau de remplissage particulaire et revêtue d'un motif, de telle façon qu'il y ait des zones sur la surface supérieure du film support texturé qui soient revêtues et des zones qui ne soient pas revêtues et que l'aspect des zones revêtues et non-revêtues sur le film support texturé soit visuellement uniforme.

2. Article revêtu selon la revendication 1, dans lequel le matériau de remplissage particulaire est de la silice amorphe.

3. Article revêtu selon la revendication 1, dans lequel le matériau de remplissage particulaire a un diamètre qui est supérieur à l'épaisseur de la couche de revêtement à apprêt à faible adhérence.

4. Article revêtu selon la revendication 1, dans lequel le matériau de remplissage particulaires est présent dans la plage de 1 à 15 parties en poids de la couche de revêtement à apprêt à faible adhérence.

5. Film revêtu comprenant un film ayant une surface supérieure et une surface inférieure, et la surface supérieure a une couche à apprêt à faible adhérence chargée de matériau de remplissage particulaire et revêtue d'un motif, de telle façon qu'il y ait une première zone revêtue avec une première couche à apprêt à faible adhérence et une seconde zone revêtue avec une seconde couche à apprêt à faible adhérence et que l'aspect des deux zones revêtues sur le film soit visuellement uniforme.

6. Film revêtu selon la revendication 5, dans lequel la première et la seconde couche à apprêt à faible adhérence sont identiques.

7. Film revêtu selon la revendication 5, dans lequel la première et la seconde couche à apprêt à faible adhérence sont différentes.

8. Film revêtu selon la revendication 6, dans lequel la première zone et la seconde zone sont revêtues de motifs différents.

9. Film revêtu comprenant un film texturé avec une surface supérieure et une surface inférieure, et la surface supérieure a une couche à apprêt à faible adhérence (LAB) revêtue d'un motif, de telle façon qu'il y ait des zones qui soient revêtues avec au moins une zone revêtue avec une première couche à apprêt à faible adhérence, au moins une zone revêtue avec une seconde couche à apprêt à faible adhérence et au moins une zone qui ne soit pas revêtue, de telle façon que l'aspect des deux zones revêtues et de la zone non-revêtue soit visuellement uniforme.

10. Film revêtu selon la revendication 9, dans lequel la première et la seconde couche à apprêt à faible adhérence sont identiques.

11. Film revêtu selon la revendication 9, dans lequel la première et la seconde couche à apprêt à faible adhérence sont différents.

12. Film revêtu selon la revendication 10, dans lequel la première zone et la seconde zone sont revêtues de motifs différents.
